# EUROPÄISCHE PATENTSCHRIFT

(11) **EP 2 923 910 B1**
(45) Veröffentlichungstag und Bekanntmachung des Hinweises auf die Patenterteilung: **06.03.2019**
(21) Anmeldenummer: 14003347.3
(22) Anmeldetag: 27.09.2014
(51) Int. Cl.: B60W 30/00, B60W 30/02, B60W 30/20

(54) **VORRICHTUNG UND VERFAHREN ZUR VERARBEITUNG EINER DREHMOMENTANFORDERUNG FÜR EINE ANTRIEBSMASCHINE UND ZUR REDUZIERUNG VON TRIEBSTRANGSCHLÄGEN**
DEVICE AND METHOD FOR PROCESSING A TORQUE REQUIREMENT FOR A DRIVE MACHINE AND REDUCING POWER TRAIN SHOCKS
PROCÉDÉ ET DISPOSITIF DE TRAITEMENT D'UNE SOLLICITATION DE COUPLE DE ROTATION POUR UNE MACHINE D'ENTRAÎNEMENT ET DE RÉDUCTION DE CHOCS DE TRANSMISSION

(30) Priorität: 13.12.2013 DE 102013021010
(43) Veröffentlichungstag der Anmeldung: 30.09.2015
(73) Patentinhaber: MAN Truck & Bus AG, 80995 München (DE)
(72) Erfinder: Weller, Ralf, 80638 München (DE); Schön, Christian, 80798 München (DE); Berchtold, Florian, 85748 Garching (DE)
(74) Vertreter: v. Bezold & Partner Patentanwälte - PartG mbB

(56) Entgegenhaltungen:
- EP-A2- 1 231 580
- EP-A2- 2 196 372
- US-A1- 2011 066 344
- US-A1- 2011 257 854
- US-A1- 2013 035 838

## Beschreibung

Die Erfindung betrifft eine Vorrichtung zur Verarbeitung einer Drehmomentanforderung für eine Antriebsmaschine und zur Reduzierung von Triebstrangschlägen.

Triebstrangschläge, auch als Ruckelschwingung bezeichnet, sind im Stand der Technik bekannt und stellen unerwünschte Fahrzeug-Längsschwingungen dar, die durch Energieeinleitung, insbesondere beim Beschleunigen des Fahrzeugs, in das Schwingungssystem Motor-Triebstrang-Karosse erzeugt werden.

Zur Vermeidung oder Reduzierung solcher Triebstrangschläge ist es aus dem Stand der Technik bekannt, die Drehmomentanforderungen der Drehmomentquellen, im Folgenden auch Momentenanforderungen genannt, wie beispielsweise die Drehmomentanforderung des Fahrpedals, des Tempomats oder Limitierungen wie die des Geschwindigkeitbegrenzers zu filtern, um einen möglichst verrundeten Verlauf der Drehmomentanforderung und/oder einen Verlauf mit reduzierten Gradienten zu erzeugen, bevor die Drehmomentanforderung an die Motorsteuerung weitergeleitet wird.

Aus dem Stand der Technik offenbart die US 2011/0257854 A1 beispielsweise, dass ein Arbitrierungsmodul eine Fahrer-Achsenanforderung und andere Fahrer-Drehmomentanforderungen empfängt und zwischen diesen empfangenen Anforderungen arbitriert. Das Arbitrierungsmodul gibt den Gewinner der Arbitrierung als eine Roh-Fahrer-Achsenanforderung aus. Ein Formungsmodul empfängt die Roh-Fahrer-Achsenanforderung und formt diese selektiv um.

Die US 2013/0035838 A1 offenbart, dass eine Drehmomentanforderung als ein Summenmoment zu einer Verteilungseinheit zugeführt wird. Die Verteilungseinheit teilt das Summenmoment in Abhängigkeit von nicht näher bestimmten Eingangsparametern in ein Sollmoment für den Vorderachsenantrieb und in ein Sollmoment für einen Hinterachsantrieb auf. Die Signalverarbeitung der aufgeteilten Sollmomente wird dann in voneinander unabhängigen, parallelen Bearbeitungssträngen durchgeführt, in denen die Sollmomente in einer Tiefpassfiltereinheit und einer Lastschlagdämpfungseinheit gefiltert werden können.

Die US 2011/0066344 A1 offenbart eine Vorrichtung, bei der für jede Art von Anforderung (Position, Geschwindigkeit, Beschleunigung) ein eigener Arbitrierungsabschnitt und eine eigener Umwandlungsabschnitt zur Verfügung stehen. Der jeweilige Arbitrierungsabschnitt arbitriert zwischen einer Mehrzahl von jeweiligen Anforderungen. Zum Beispiel arbitriert der Arbitrierungsabschnitt für Positionssteueranforderungen zwischen einer Mehrzahl von Positionssteueranforderungen. Der Umwandlungsabschnitt wandelt schließlich eine ausgewählte Anforderung in eine nachfolgende Regelungsdimension (z.B. Umwandlung von Position in Geschwindigkeit).

Aus der Praxis ist bekannt, einen spezifischen Sollwertumformer für jede Quelle einer Drehmomentanforderung vorzusehen. Der Sollwertumformer ist ausgelegt, die Drehmomentanforderung, die von einer spezifischen Drehmomentquelle erzeugt wird, mittels einer passiven Filterung zeitlich so zu verzögern, dass ein verrundeter und abgeflachter Momentenverlauf erzeugt wird, der reduzierte Triebstrangschläge bewirkt.

So werden beispielsweise von den unterschiedlichen Herstellern von Drehmomentanforderungsquellen, z. B. von Fahrgeschwindigkeitsreglern, Fahrpedalreglern, Schallmanagementsystemen, etc., Sollwertumformer bereitgestellt, die die von einer Drehmomentanforderungsquelle erzeugte Drehmomentanforderung mit verrundetem bzw. geglättetem Verlauf gefiltert ausgeben, bevor die gefilterten Drehmomentanforderungen in einer Momentenkoordinationsvorrichtung arbitriert werden.

Nachteilig an derartigen Ansätzen zur Reduzierung von Triebstrangschlägen ist, dass der Fahrzeughersteller die bereits gefilterten Drehmomentanforderungen, die von zulieferseitig bereitgestellten Sollwertumformern erzeugt werden, nicht auf einfache Weise fahrzeugspezifisch anpassen kann, was insbesondere für einen Nutzfahrzeughersteller, der eine hohe Variantenvielfalt an Fahrzeugkonfigurationen über sogenannte "End-of-Line"-Parameter anbietet, wünschenswert wäre. Außerdem ergibt sich eine große Komplexität, wenn mehrere Drehmomentanforderungen und -limitierungen gleichzeitig mit getrennten Sollwertumformern aktiv sind, da die Übergänge zwischen den einzelnen Sollwertumformern berücksichtigt werden müssen.

Es ist somit eine Aufgabe der Erfindung, eine verbesserte Vorrichtung und ein Verfahren zur Verarbeitung einer Drehmomentanforderung für eine Antriebsmaschine zur Reduzierung von Triebstrangschlägen bereitzustellen, mit denen Nachteile herkömmlicher Techniken vermieden werden können.

Die Aufgabe der Erfindung ist es insbesondere, eine Vorrichtung zur Reduzierung von Triebstrangschlägen bereitzustellen, die eine flexiblere, wenig komplexere Anpassung und Parametrisierung der Vorrichtung ermöglicht.

Diese Aufgaben werden durch eine Vorrichtung und ein Verfahren zur Verarbeitung einer Drehmomentanforderung für eine Antriebsmaschine und zur Reduzierung von Triebstrangschlägen gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine Vorrichtung zur Verarbeitung einer Drehmomentanforderung für eine Antriebsmaschine und zur Reduzierung von Triebstrangschlägen bereitgestellt, die eingerichtet ist, eingangsseitig mindestens eine Drehmomentanforderung und mindestens eine Kennung zur Identifizierung einer Quelle der Drehmomentanforderung zu empfangen. Die Vorrichtung ist ferner eingerichtet, eine von vorbestimmten Signalverarbeitungsalternativen in Abhängigkeit von der mindestens einen Kennung auszuwählen und auf die mindestens eine empfangene Drehmomentanforderung zum Erzeugen mindestens einer verarbeiteten Drehmomentanforderungen anzuwenden. Hierbei unterscheiden sich die vorbestimmten Signalverarbeitungsalternativen in einer zeitlichen Verzögerung, mit der die mindestens eine verarbeitete Drehmomentanforderung ausgegeben wird.

Eine Drehmomentanforderung im Sinne dieser Erfindung kann eine Drehmomentvorgabe, d. h. ein einzustellender Drehmomentsollwert der Antriebseinheit, oder eine Drehmomentlimitierung, d. h. ein Maximalwert des Drehmoments der Antriebseinheit, der nicht überschritten werden soll, sein. Die Drehmomentanforderung ist somit ein einzustellender Sollwert oder ein Maximalwert, der für die Ausgangsgröße einer Antriebsmaschine, beispielsweise eines Motors eines Fahrzeugs, insbesondere eines Nutzfahrzeugs, vorgegeben wird.

Die Vorrichtung zur Verarbeitung einer Drehmomentanforderung zur Reduzierung von Triebstrangschlägen wird nachfolgend auch als Sollwertumformervorrichtung bezeichnet, da sie den Signalverlauf der Drehmomentanforderung in eine Signalform ändert, die zu reduzierten Triebstrangschlägen führt, z. B. durch Erzeugen eines Signalverlaufs mit verrundeten Ecken und/oder geringeren Gradientenverläufen.

Das Ausbilden der Sollwertumformervorrichtung derart, dass diese eine Kennung derjenigen Quelle, die die Drehmomentanforderung erzeugt, beispielsweise in Form einer Quellenadresse, empfängt, ermöglicht das algorithmische und räumliche Entkoppeln der Umformung der Drehmomentanforderung von der funktionellen Einheit, die die Drehmomentanforderung erzeugt.

Gemäß einem bevorzugten Ausführungsbeispiel umfassen die vorbestimmten Signalverarbeitungsalternativen eine erste Signalverarbeitung, die, falls ausgewählt, die empfangene mindestens eine Drehmomentanforderung mit einer ersten zeitlichen Verzögerung filtert; eine zweite Signalverarbeitung, die, falls ausgewählt, die empfangene mindestens eine Drehmomentanforderung mit einer zweiten zeitlichen Verzögerung filtert, wobei die zweite Verzögerung größer als die erste Verzögerung ist; und eine dritte Signalverarbeitung, mittels der, falls ausgewählt, die empfangene mindestens eine Drehmomentanforderung im Wesentlichen ohne zeitliche Verzögerung und/oder mit einer im Wesentlichen unveränderten Signalform von der Vorrichtung ausgegeben wird.

Es besteht somit im Rahmen der Erfindung die Möglichkeit, dass die Sollwertumformervorrichtung mindestens drei verschiedene Verhaltensweisen aufweisen kann, die abhängig von der Kennung auf das eingangsseitig empfangene Drehmomentanforderungssignal angewendet werden. Eine Besonderheit liegt darin, dass die Signalverarbeitungsalternativen generische Verhaltensweisen der Sollwertumformervorrichtung festlegen, die jeweils auf Drehmomentanforderungssignale von unterschiedlichen Drehmomentquellen anwendbar sind. Hierbei unterscheiden sich die erste und zweite Signalverarbeitung bzw. die erste und zweite Verhaltensweise in der zeitlichen Verzögerung des Signals, das ausgangsseitig erzeugt wird. Die Signalverarbeitungsalternative mit der kürzeren Verzögerung ist typischerweise so ausgebildet, dass sie einen guten Kompromiss aus Dynamik und Fahrkomfort darstellt und typischerweise für ein Fahrpedal angewendet wird. Die Verhaltensweise mit der größeren Verzögerung ermöglicht einen größeren Fokus auf den Fahrkomfort und kann z. B. für den Fahrgeschwindigkeitsregler, angewendet werden.

Die dritte Signalverarbeitung, bei der die mindestens eine Drehmomentanforderung im Wesentlichen ohne zeitliche Verzögerung und/oder mit einer im Wesentlichen unveränderten Signalform von der Vorrichtung ausgegeben wird, entspricht einer Verhaltensweise, bei der keine zusätzliche Signalverzögerung oder zusätzliche Verrundung oder Glättung auf das Eingangssignal angewendet wird. Dies ist z. B. für Limitierungen von Bremssystemanforderungen (ASR) wichtig, da diese schnellstmöglich und ohne Verzögerung umgesetzt werden sollten. Eine Ausgabe der Signale "im Wesentlichen ohne zeitliche Verzögerung" soll daher bedeuten, dass, abgesehen von den notwendigen kurzen Durchlaufzeiten durch die Vorrichtung, keine zusätzliche Verzögerung zur Reduzierung eines Triebstrangschlages in der dritten Signalverarbeitungsalternative erzeugt wird.

Die Implementierung derartiger Verhaltensweisen ist an sich aus dem Stand der Technik bekannt und kann beispielsweise durch geeignete passive Filter, die entlang des Momentenverlaufs abschnittsweise eine unterschiedliche Gradientenbegrenzung durchführen, realisiert werden. Je nach gewünschter zeitlicher Verzögerung bzw. Verrundung oder Glättung der Signalform können unterschiedliche Gradientenbegrenzungen gewählt werden. Die dritte Signalverarbeitungsalternative entspricht dabei einer Deaktivierung des Filters, so dass das Signal im Wesentlichen ungefiltert durch die Vorrichtung läuft.

Mit diesen drei Signalverarbeitungsalternativen können die meisten Anforderungen zur Verarbeitung von Drehmomentvorgaben im Hinblick auf die Reduzierung von Triebstrangschlägen umgesetzt werden. Selbstverständlich ist die Erfindung nicht auf das Vorsehen von genau drei Signalverarbeitungsalternativen beschränkt, sondern es können prinzipiell beliebig viele Signalverarbeitungsalternativen in der Vorrichtung implementiert werden und mittels einer hinterlegten Zuordnung zu einer entsprechenden Kennung und/oder Art der Momentanforderung auf die empfangenen Momentanforderungen angewendet werden.

Vorzugsweise ist die Vorrichtung eingerichtet, die mindestens eine empfangene Drehmomentanforderung gemäß der dritten Signalverarbeitung zu verarbeiten, wenn der Kennung der empfangenen Drehmomentanforderung in der Vorrichtung keine der Signalverarbeitungsalternativen zugeordnet ist. Dies stellt sicher, dass Drehmomentanforderungen, deren Quelle unbekannt ist, ohne zeitliche Verzögerung durchgeleitet werden, da diese potentiell sicherheitsrelevant sein könnten.

Gemäß einem besonders bevorzugten Ausführungsbeispiel ist die Vorrichtung eingerichtet, eine erste Drehmomentanforderung und eine erste Kennung zur Identifizierung der Quelle der ersten Drehmomentanforderung sowie eine zweite Drehmomentanforderung und zweite Kennung zur Identifizierung der Quelle der zweiten Drehmomentanforderung zu empfangen, wobei die erste Drehmomentanforderung eine Drehmomentvorgabe und die zweite Drehmomentanforderung eine Drehmomentlimitierung ist. Es wurde vorstehend bereits erwähnt, dass unter einer Drehmomentvorgabe ein Drehmomentsollwert verstanden werden soll, der als Ausgangsgröße des Fahrzeugmotors eingestellt werden soll, während die Drehmomentlimitierung einen Maximalwert für das Drehmoment des Motors vorgibt, der nicht überschritten werden soll.

Gemäß dieser Ausführungsform ist die Vorrichtung ferner eingerichtet, für die erste Drehmomentanforderung und die zweite Drehmomentanforderung jeweils eine der vorbestimmten Signalverarbeitungsalternativen in Abhängigkeit von der jeweiligen Kennung und in Abhängigkeit davon, ob die Drehmomentanforderung eine Drehmomentvorgabe oder eine Drehmomentlimitierung ist, auszuwählen und auf die empfangenen Drehmomentanforderungen anzuwenden. Dies bietet den Vorteil, dass auf eine Momentanforderung und eine Momentlimitierung mit gleicher Kennung unterschiedliche Verhaltensweisen der Vorrichtung parametrisiert werden können, so dass in diesem Fall die Zuordnung einer Verhaltensweise zu einer Kennung der Drehmomentquelle zusätzlich von der Art der Momentenanforderung abhängig ist.

Gemäß einer vorteilhaften Variante dieser Ausführungsform umfasst die Sollwertumformervorrichtung ferner ein Auswahlmittel, das eingerichtet ist, aus der Drehmomentvorgabe und der Drehmomentlimitierung die kleinere Drehmomentvorgabe zu bestimmen und nur diese als verarbeitete Drehmomentvorgabe auszugeben. Gemäß dieser Variante empfängt die Vorrichtung daher eingangsseitig eine Drehmomentvorgabe und eine Drehmomentlimitierung und gibt die maßgebliche der beiden Momentvorgaben ausgangsseitig aus.

Gemäß einer weiteren bevorzugten Ausführungsform ist die Vorrichtung zur Hinterlegung weiterer Kennungen konfigurierbar, derart, dass die in der Vorrichtung hinterlegte Zuordnung, die einer empfangenen Kennung eine der vorbestimmten Verarbeitungsalternativen zuordnet, um weitere Kennungswerte zur Identifizierung weiterer Quellen einer Drehmomentanforderung erweiterbar ist. Ein besonderer Vorzug der Erfindung liegt somit darin, dass eine Erweiterung der Anforderungsquellen keine funktionale Änderung der Vorrichtung erfordert. Stattdessen ergibt sich nur ein geringer Anpassungsaufwand, da bereits die grundlegenden hinterlegten generischen Signalverarbeitungsalternativen definiert sind und nur noch die Zuordnung der Kennung zu einer der Signalverarbeitungsalternativen notwendig ist, die bei Integration einer neuen Drehmomentquelle entsprechend hinzugefügt werden kann.

Eine beispielhafte Möglichkeit der Realisierung sieht vor, eine Tabelle in der Vorrichtung zu hinterlegen, die jeder Kennung eine der verfügbaren Signalverarbeitungsalternativen zuordnet. Eine neue, bisher nicht hinterlegte Quelle kann dann durch einfaches Erweitern der Tabelle berücksichtigt werden, so dass anschließend die Kennung von der Sollwertumformervorrichtung erkannt und der zugehörige Signalverlauf der Drehmomentanforderung entsprechend gemäß der zugeordneten Signalverarbeitungsalternative verarbeitet wird.

Die Möglichkeit, neue Momentenquellen zuzuschalten bzw. integrieren zu können, und das räumliche Entkoppeln der Sollwertumformung von der Momentenquelle sind insbesondere bei Nutzfahrzeugen besonders vorteilhaft, da hier die Verwendung von sogenannten "End-Off-Line"-Parametern verbreitet ist, um der starken Parametrisierung von Nutzfahrzeugen Rechnung zu tragen.

Vorzugsweise umfasst die Vorrichtung eine Filtervorrichtung zur Verarbeitung der mindestens einen Drehmomentanforderung, die in Abhängigkeit von der ausgewählten Signalverarbeitungsalternative parametrisierbar ist, um die mindestens eine Drehmomentanforderung gemäß der ausgewählten Signalverarbeitungsalternative zu filtern, und/oder die eingerichtet ist, zumindest abschnittsweise eine Gradientenbegrenzung der mindestens einen Drehmomentanforderung durchzuführen.

Ein weiterer vorteilhafter Aspekt der Erfindung betrifft eine Anordnung zur Verarbeitung von Drehmomentanforderungen, umfassend eine Momentenkoordinationsvorrichtung, auch Arbitrierungsvorrichtung genannt, und eine Sollwertumformervorrichtung gemäß einem der vorstehend beschriebenen Aspekte, die nach der Momentenkoordinationsvorrichtung angeordnet ist und eingangsseitig die von der Momentenkoordinationsvorrichtung ausgewählte Drehmomentvorgabe und Drehmomentlimitierungen empfängt.

Die Momentenkoordinationsvorrichtung ist eingerichtet, aus einer Vielzahl der der Momentenkoordinationsvorrichtung zugeführten Drehmomentvorgaben und Drehmomentlimitierungen jeweils eine Drehmomentvorgabe und jeweils eine Drehmomentlimitierung auszuwählen und auszugeben. In der Momentenkoordinationsvorrichtung erfolgt somit die Arbitrierung der Momentenanforderungen mittels einer hinterlegten Priorisierung. Derartige Momentenkoordinationsvorrichtungen sind an sich aus dem Stand der Technik bekannt.

Ein besonderer Vorzug der vorliegenden Erfindung liegt somit darin, dass die Sollwertumformervorrichtung nach der Momentenkoordination anordenbar ist, vorzugsweise auf dem zentralen Steuergerät oder auf dem Motorsteuergerät.

Die Erfindung betrifft ferner ein Verfahren zur Verarbeitung einer Drehmomentvorgabe für eine Antriebsmaschine und zur Reduzierung von Triebstrangschlägen mit den Schritten: Empfangen mindestens einer Drehmomentanforderung und mindestens einer Kennung zur Identifizierung einer Quelle der Drehmomentanforderung; Auswählen einer von mehreren vorbestimmten Signalverarbeitungsalternativen in Abhängigkeit von der Kennung der empfangenen mindestens einen Drehmomentanforderung; und Durchführen einer Signalverarbeitung gemäß der ausgewählten Signalverarbeitungsalternative zur Erzeugung mindestens einer verarbeiteten Drehmomentanforderung aus der mindestens einen empfangenen Drehmomentanforderung, wobei sich die vorbestimmte Signalverarbeitungsalternativen in einer zeitlichen Verzögerung unterscheiden, mit der die mindestens eine verarbeitete Drehmomentanforderung ausgegeben wird.

Zur Vermeidung von Wiederholungen sollen rein vorrichtungsgemäß offenbarte Merkmale auch verfahrensgemäß offenbart gelten und beanspruchbar sein und umgekehrt. Die vorgenannten Aspekte und erfindungsgemäßen Merkmale betreffend die Vorrichtung gelten somit auch für ein Verfahren zur Verarbeitung einer Drehmomentvorgabe und zur Reduzierung von Triebstrangschlägen.

Weitere Einzelheiten und Vorteile der Erfindung werden im Folgenden unter Bezug auf die beigefügten Zeichnungen beschrieben. Es zeigen:
- Figur 1: eine schematische beispielhafte Darstellung einer ungefilterten Drehmomentanforderung und einer gefilterten Drehmomentanforderung mit verrundetem Verlauf und Gradientenbegrenzung;
- Figur 2: ein schematisches Blockschaltbild mit einer Momentenkoordinationsvorrichtung und einer Sollwertumformervorrichtung gemäß einem Ausführungsbeispiel der Erfindung;
- Figur 3: ein schematisches Blockschaltbild einer Sollwertumformervorrichtung gemäß einem Ausführungsbeispiel der vorliegenden Erfindung; und
- Figur 4: ein von der Sollwertumformervorrichtung erzeugtes Ausgangssignal gemäß einem Ausführungsbeispiel.

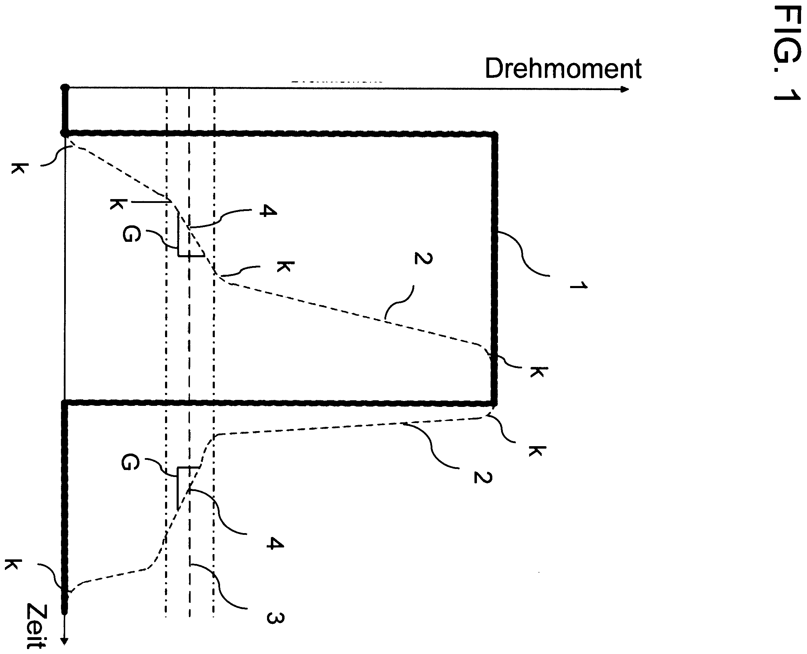

Figur 1 zeigt beispielhaft eine ungefilterte Drehmomentvorgabe 1 und eine gefilterte Drehmomentanforderung 2. Die in Form einer Rechteckfunktion erzeugte Drehmomentanforderung 1 wird durch eine Sollwertumformervorrichtung (nicht gezeigt) passiv gefiltert und als gefilterte Drehmomentanforderung 2 (gestrichelte Kurve) ausgegeben.

Die Drehmomentanforderung 1 kann beispielsweise von einem Fahrpedal, einem Getriebeeingriff, einem Fahrgeschwindigkeitsregler, einem Schall-Management-System oder einer anderen Drehmomentanforderungsquelle erzeugt werden. Die Drehmomentanforderung 1 kann als Drehmomentvorgabe oder als Drehmomentlimitierung erzeugt werden. Unter einer Drehmomentvorgabe wird ein Sollwert für das anzusteuernde Motordrehmoment verstanden, auf den die Einspritzmenge eingestellt werden soll. Unter einer Drehmomentlimitierung wird ein Limitwert verstanden, den das einzustellende Motordrehmoment nicht überschreiten darf.

In Übereinstimmung mit dem Stand der Technik werden die Kanten der Rechteckfunktion 1 durch die Sollwertumformervorrichtung verrundet, was durch die Verrundungsfaktoren k in Figur 1 dargestellt ist. Ferner wird mittels einer aus dem Stand der Technik bekannten Gradientenbegrenzung um das Kupplungsnullmoment, das durch die gestrichelte Linie 3 gekennzeichnet ist, ein möglichst geringer Gradient G erzeugt. Als Kupplungsnullmoment wird das primärseitig indizierte innermotorische Moment bezeichnet, welches dazu führt, dass über die Kupplung kein Moment übertragen wird. Am Kupplungsnullmoment ist der Triebstrang somit entspannt, da an diesem Punkt das erzeugte Drehmoment von motorseitigen Verlusten und motorseitigen Verbrauchern aufgebracht wird.

Hierbei wird in einem Bereich um das Kupplungsnullmoment 3, in Figur 1 durch die strichgepunkteten Linien ober- und unterhalb der Linie 3 illustriert, der Kurvenverlauf der Momentvorgabe 1 zeitlich so verzögert, dass die resultierende Momentvorgabe 2 in dem Bereich um den Kupplungsnullpunkt 3 einen möglichst konstanten Verlauf 4 mit schwacher Steigung G aufweist. Bei dem Momentenaufbau in Figur 1 handelt es sich um eine passive Steuerung und somit nicht um einen geschlossenen Regelkreis, wie dies bei der aus der Stand der Technik ebenfalls bekannten aktiven Schwingungsdämpfung der Fall ist.

Das Erzeugen eines verrundeten und geglätteten Verlaufs 2 der ursprünglichen Momentenanforderung 1, mit einem möglichst geringen Gradienten G im Bereich des Kupplungsnullmoments 3, ist an sich aus dem Stand der Technik bekannt. Beispielsweise kann durch Anwenden geeigneter Filter das Ursprungssignal 1 im Bereich um das Kupplungsnullmoment 3 zeitlich verzögert werden, so dass die zweite Ableitung und vorzugsweise auch die erste Ableitung des Momentenverlaufs möglichst geringe Werte annehmen.

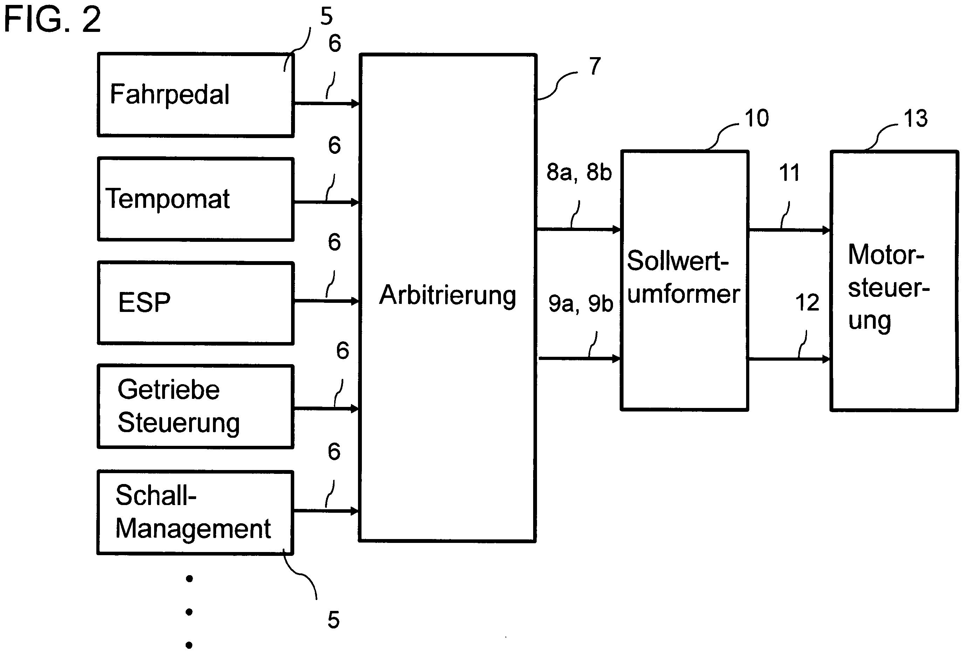

Figur 2 zeigt ein schematisches Blockschaltbild, das die Verarbeitung von Momentenanforderungen in einem Kraftfahrzeug, insbesondere einem Nutzfahrzeug illustriert.

Kraftfahrzeuge und insbesondere moderne Nutzfahrzeuge weisen üblicherweise eine Vielzahl von Systemen und Einflussgrößen auf, die auf die Längsbewegung bzw. die Antriebs- und Verzögerungskraft Einfluss nehmen, indem diese Drehmomentanforderungen 6 für den Motor ausgeben. Als Beispiele seien hierbei das Fahrpedal, ASR, ABS, die Getriebesteuerung, Geschwindigkeitsregler, das Schallmanagement und dergleichen genannt, die in Figur 2 mit dem Bezugszeichen 5 bezeichnet sind. Die Drehmomentanforderungen 6 werden an eine Momentenkoordinationsvorrichtung 7 übermittelt und können, je nach Art der Quelle 5, als Drehmomentvorgabe und/oder als Drehmomentlimitierung vorgegeben werden. Aus dieser Vielzahl von entsprechend resultierenden Drehmomentanforderungen 6 ist es erforderlich, diejenigen zu ermitteln, auf Basis derer die Motorsteuerung 13 die Antriebseinheit (nicht gezeigt) steuern soll. Hierbei hat sich im Stand der Technik ein Verfahren zur Arbitrierung bzw. zur Auswahl von Drehmomentanforderungen etabliert, wobei beispielsweise eine prioritätsgesteuerte Auswahl aus einer Reihe von Drehmomentanforderungen 6 verschiedener Systeme 5 mit jeweils einheitlich strukturierter Drehmomentanforderungen getroffen wird. Einzelanforderungen werden dabei jeweils anderen Anforderungen gegenübergestellt, und anhand vorgegebener Prioritätsregeln wird ausgewählt, welche der Anforderungen erfüllt wird. Ein solches Verfahren ist beispielsweise in der Norm SAE J1939/71 bekannt.

Eine derartige Momentenkoordinationsvorrichtung 7 erzeugt somit aus einer Vielzahl von Drehmomentvorgaben 6 und Drehmomentlimitierungen 6 jeweils eine Drehmomentvorgabe 8a und eine Drehmomentlimitierung 9a, die von der Momentenkoordinationsvorrichtung 7 ausgegeben wird.

Gemäß dem vorliegenden Ausführungsbeispiel ist ausgangsseitig zu der Momentenkoordinationsvorrichtung 7 eine Sollwertumformervorrichtung 10 angeordnet, die eingangsseitig die von der Momentenkoordinationsvorrichtung 7 ausgegebenen Drehmomentvorgabe 8a sowie die zugehörige Kennung 8b empfängt. Die Kennung 8b identifiziert die zu der Drehmomentvorgabe 8a zugehörige Quelle 5, die die Drehmomentvorgabe erzeugt hat. Ferner ist die Sollwertumformervorrichtung 10 eingerichtet, eine Drehmomentlimitierung 9a und die zugehörige Kennung 9b zu empfangen.

Diese Sollwertumformervorrichtung 10 ist ferner eingerichtet, in Abhängigkeit von der Kennung 8b, 9b und in Abhängigkeit davon, ob das Eingangssignal eine Drehmomentvorgabe, d. h. ein Drehmomentsollwert, der eingestellt werden soll, oder eine Drehmomentlimitierung ist, eine entsprechende Verhaltensweise der Sollwertumformervorrichtung zu bestimmen und auf das Eingangssignal anzuwenden. Hierzu sind in der Sollwertumformervorrichtung 10 mehrere Verhaltensweisen hinterlegt. Mit anderen Worten ist die von der Sollwertumformervorrichtung 10 durchgeführte Signalverarbeitung abhängig von der Kennung und abhängig von der Art der Momentanforderung.

Hierzu umfasst die Sollwertumformervorrichtung 10 eine Filtervorrichtung (nicht gezeigt) zur Verarbeitung der empfangenen Drehmomentanforderungen, die in Abhängigkeit von der ausgewählten Signalverarbeitungsalternative parametrisierbar ist, um die Drehmomentanforderung gemäß der ausgewählten Signalverarbeitungsalternative zu filtern. Im vorliegenden Ausführungsbeispiel ist die Signalumformervorrichtung 10 eingerichtet, drei verschiedene Verhaltensweisen bzw. Signalverarbeitungsalternativen vorzusehen. Der Hauptunterschied der Verhaltensweisen liegt in der akzeptierten zeitlichen Verzögerung, welche sich durch die Filterung ergibt.

Für die meisten Anwendungsfälle reichen drei verschiedene Verhaltensweisen aus, die vorstehen bereits kurz beschrieben wurden.

Die aus der Praxis bekannten Momentenkoordinationsvorrichtungen 7 sind bereits ausgebildet, die Kennungen 8b, 9b in Form einer Quelladresse zur Identifizierung der Quelle der Drehmomentanforderung bereitzustellen, die erfindungsgemäß genutzt werden kann, um in der Sollwertumformervorrichtung aus einer Mehrzahl von generischen Verhaltensweisen in Abhängigkeit der Kennung die gewünschte auszuwählen.

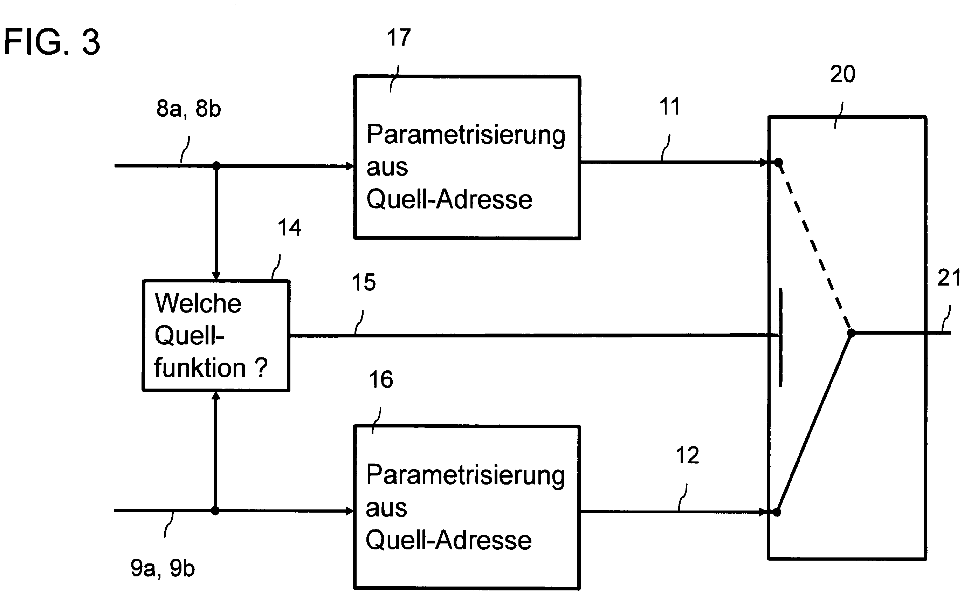

Figur 3 beschreibt weitere Funktionen der Sollwertumformervorrichtung 10 in einem Blockschaltbild. Die Sollwertumformervorrichtung 10 bestimmt zuerst, welche der beiden Momentanforderungen, d. h. die Momentvorgabe 8a oder die Momentlimitierung 9a, maßgeblich ist. Hierzu ist ein Auswahlmittel 14, 20 vorgesehen. Das Auswahlmittel besteht aus einem Komparator 14, welcher die maßgebliche Drehmomentanforderung bestimmt. Die maßgebliche Drehmomentanforderung einer Drehmomentvorgabe 8a in der Höhe von M_REQ und einer Drehmomentlimitierung 9a in der Höhe M_Limit ergibt sich aus min(M_Req, M_Limit), d. h. die kleinere der beiden Drehmomentanforderungen ist maßgeblich für das einzustellende Motordrehmoment und wird von dem Komparator 14 ermittelt.

Je nachdem, welche Drehmomentanforderung als maßgebliche Drehmomentanforderung bestimmt wurde, steuert der Komparator 14 über eine Signalleitung 15 einen Schalter 20, so dass ausgangsseitig nur das maßgebliche Signal ausgegeben wird. Mit den schematischen Blöcken 17 und 16 werden jeweils die Filter bezeichnet, die aus der eingangsseitig empfangenen Drehmomentanforderung eine verarbeitete, d. h. gefilterte Drehmomentvorgabe 11 bzw. eine gefilterte Drehmomentlimitierung 12 erzeugen, mit einem Verlauf, der beispielhaft mit dem Bezugszeichen 2 in Figur 1 illustriert ist. Je nach Schalterstellung wird das Signal 11 oder das Signal 12 ausgangsseitig als Ausgabesignal 21 von der Vorrichtung 10 ausgegeben.

Für eine empfangene Drehmomentvorgabe 8a bestimmt die Filtereinrichtung 17 anhand der empfangenen Kennung 8b, welche der drei zuvor genannten Verhaltensweisen angewendet wird. Für jede ausgewählte Verhaltensweise (beispielsweise keine Filterung, schnelle Filterung oder langsame Filterung) ist eine entsprechende Parametrisierung in der Filtervorrichtung 17 hinterlegt, die ausgewählt wird, um den Filter zu parametrisieren, so dass entsprechend der Kennung ein bestimmtes Filterverhalten auf die empfangene Drehmomentvorgabe 8a angewendet wird. Entsprechend der ausgewählten Filteralternative wird eine verarbeitete Drehmomentvorgabe 11 mit entweder im Wesentlichen keiner zeitlichen Verzögerung, einer geringen zeitlichen Verzögerung oder einer großen zeitlichen Verzögerung erzeugt und als Ausgangssignal 21 ausgegeben, wenn sich der Schalter in der Stellung befindet, die das Signal 11 ausgibt.

In Figur 3 ist jedoch eine Stellung des Schalters gezeigt, der zu diesem Zeitpunkt nur die verarbeiteten Signale der Drehmomentlimitierung 12 ausgibt.

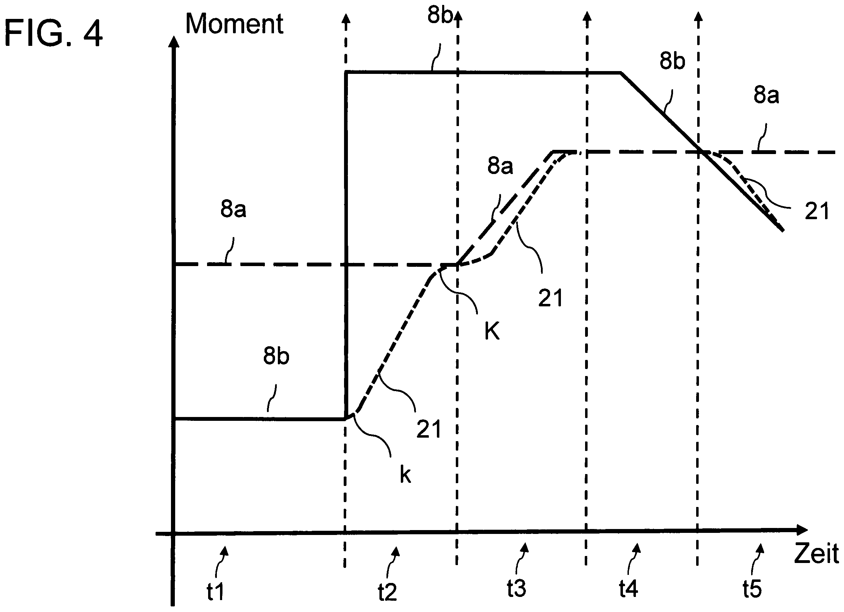

Figur 4 illustriert beispielhaft das Ausgabeverhalten der Sollwertumformervorrichtung 10 gemäß einem Ausführungsbeispiel. Hierbei illustriert die mit dem Bezugszeichen 8b gekennzeichnete Kurve wiederum eine eingangsseitig von der Sollwertumformervorrichtung 10 empfangene Drehmomentlimitierung. Die mit dem Bezugszeichen 8a gekennzeichnete gestrichelte Linie bezeichnet eine von der Sollwertumformervorrichtung 10 eingangsseitig empfangene Drehmomentsollvorgabe, d. h. Drehmomentanforderung. Die mit dem Bezugszeichen 21 gekennzeichnete gepunktete Linie kennzeichnet das ausgegebene Signal der Sollwertumformervorrichtung 10.

Im ersten Abschnitt t1 ist das Drehmomentlimit 8b kleiner als die Drehmomentsollvorgabe, so dass das Limit maßgeblich ist. Daher ist in diesem Abschnitt das Ausgangssignal der Sollwertumformervorrichtung 10 identisch mit der Limitvorgabe 8b. In Abschnitt t2 erhöht sich die Drehmomentlimitierung 8b abrupt über einen Wert, der über einer aktuell eingangsseitig anliegenden Drehmomentsollvorgabe 8a liegt. In Abschnitt t2 ist somit nunmehr die Drehmomentsollvorgabe maßgeblich, auf die das Motordrehmoment eingestellt werden soll. Dies wird vom Komparator 14 erkannt und der Schalter 20 in die obere Stellung zur Ausgabe des Signals 11 gebracht. Der Verlauf der gepunkteten Linie 21 zeigt, dass die Sollwertumformervorrichtung 10 eine verzögerte Anpassung auf den Wert der Kurve 8a bewirkt. Insbesondere wird durch eine geeignete Anwendung einer Gradientenbegrenzung ein verrundeter Kurvenverlauf K nach Verlassen des alten Ausgangswerts im Abschnitt t1 und vor Erreichen des neuen Zielwerts in Abschnitt t2 realisiert. Durch diesen verrundeten Verlauf mit reduziertem Gradienten können Triebstrangschläge verhindert bzw. reduziert werden.

In Abschnitt t3 erfolgt dann eine Änderung der Drehmomentvorgabe 8a auf einen höheren Wert. Die Drehmomentvorgabe 8a ist in Abschnitt t3 niedriger als die Drehmomentlimitierung 8b und damit weiterhin maßgeblich. Der Ausgangswert 21 der Sollwertumformervorrichtung 10 passt sich dem neuen Zielwert der Kurve 8a an, jedoch mit einem verzögerten Verlauf entsprechend des ausgewählten Filters.

In Abschnitt t4 bleibt der Ausgangswert der Sollwertumformervorrichtung 10 konstant auf dem eingestellten Sollwert der Drehmomentvorgabe 8a. Die Drehmomentlimitierung 8b fällt zwar in Abschnitt t4 ab, ist jedoch weiterhin über der Sollvorgabe der Kurve 8a und somit nicht maßgeblich.

Erst zu Beginn des fünften Abschnitts t5 fällt die Drehmomentlimitierung 8b unter die Drehmomentsollvorgabe 8a. Dies wird von dem Komparator 14 festgestellt. Darauf stellt der Komparator 14 die Schaltereinrichtung 20 wieder zurück in die untere Stellung, so dass ausgangsseitig die entsprechend gefilterte Momentlimitierung 12 als Momentenanforderung 21 von der Vorrichtung 10 ausgegeben wird. Der Kurvenverlauf 21 passt sich wiederum mit Verzögerung der neuen Vorgabe 8b an.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Insbesondere können die Anzahl der in der Sollwertumformervorrichtung hinterlegten Signalverarbeitungsalternativen, die Art der jeweiligen Sollwertumformung und die konkrete bauliche Ausgestaltung der Sollwertumformervorrichtung, z. B als eigenes Bauteil oder als Teil der Motorsteuerung, etc. an den konkreten Anwendungsfall angepasst werden. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Drehmomentanforderung (ungefiltert)
- 2: Drehmomentanforderung (gefiltert)
- 3: Kupplungsnullmoment (innermotorisches Motormoment, bei welchem durch die Kupplung keine Kraft übertragen wird - momentlos)
- 4: Verlauf der gefilterten Drehmomentanforderung am Kupplungsnullmoment
- 5: Quelle einer Drehmomentanforderung
- 6: Drehmomentanforderung (ungefiltert)
- 7: Momentenkoordinationsvorrichtung
- 8a: Drehmomentvorgabe (ungefiltert)
- 8b,9b: Kennung
- 9a: Drehmomentlimitierung (ungefiltert)
- 10: Sollwertumformervorrichtung
- 11: Drehmomentvorgabe (gefiltert)
- 12: Drehmomentlimitierung (gefiltert)
- 13: Motorsteuerung
- 14: Komparator
- 15: Signalleitung
- 16, 17: Sollwertumformereinheit
- 20: Schalter
- 21: Ausgegebene, gefilterte Drehmomentanforderung
- K: Verrundungsfaktor
- G: Gradient

## Patentansprüche

1. Vorrichtung zur Verarbeitung einer Drehmomentanforderung für eine Antriebsmaschine und zur Reduzierung von Triebstrangschlägen; die eingerichtet ist:
eingangseitig mindestens eine Drehmomentanforderung (8a, 9a) und mindestens eine Kennung (8b, 9b) zur Identifizierung einer Quelle (5) der Drehmomentanforderung zu empfangen; und
eine von vorbestimmten Signalverarbeitungsalternativen in Abhängigkeit von der mindestens einen Kennung (8b, 9b) auszuwählen und auf die mindestens eine empfangene Drehmomentanforderung (8a, 9a) zur Erzeugung mindestens einer verarbeiteten Drehmomentanforderung (11, 12) anzuwenden, wobei sich die vorbestimmten Signalverarbeitungsalternativen in einer zeitlichen Verzögerung unterscheiden, mit der die mindestens eine verarbeitete Drehmomentanforderung (11, 12) ausgegeben wird.

2. Vorrichtung nach Anspruch 1, **dadurch gekennzeichnet, dass** die vorbestimmten Signalverarbeitungsalternativen umfassen:
(a) eine erste Signalverarbeitung, die, falls ausgewählt, die empfangene mindestens eine Drehmomentanforderung (8a, 9a) mit einer ersten zeitlichen Verzögerung filtert;
(b) eine zweite Signalverarbeitung, die, falls ausgewählt, die empfangene mindestens eine Drehmomentanforderung (8a, 9a) mit einer zweiten zeitlichen Verzögerung filtert, wobei die zweite Verzögerung größer als die erste Verzögerung ist; und
(c) eine dritte Signalverarbeitung, mittels der, falls ausgewählt, die empfangene mindestens eine Drehmomentanforderung (8a, 9a) im Wesentlichen ohne zeitliche Verzögerung und/oder mit einer im Wesentlichen unveränderten Signalform von der Vorrichtung (10) ausgegeben wird.

3. Vorrichtung nach Anspruch 2, **dadurch gekennzeichnet, dass** die Vorrichtung (10) eingerichtet ist, die mindestens eine empfangene Drehmomentanforderung (8a, 9a) gemäß der dritten Signalverarbeitung zu verarbeiten, wenn in der Vorrichtung (10) der Kennung (8b, 9b) der empfangenen Drehmomentanforderung (8a, 9a) keine der Signalverarbeitungsalternativen zugeordnet ist.

4. Vorrichtung nach einem der vorhergehenden Ansprüche, **dadurch gekennzeichnet,**
(a) **dass** die Vorrichtung (10) eingerichtet ist, eine erste Drehmomentanforderung (8a) und eine erste Kennung (8b) zur Identifizierung der Quelle (5) der ersten Drehmomentanforderung (8a) sowie eine zweite Drehmomentanforderung (9a) und eine zweite Kennung (9b) zur Identifizierung der Quelle (5) der zweiten Drehmomentanforderung (9a) zu empfangen, wobei die erste Drehmomentanforderung (8a) eine Drehmomentvorgabe und die zweite Drehmomentanforderung (9a) eine Drehmomentlimitierung ist; und
(b) **dass** die Vorrichtung eingerichtet ist, für die erste Drehmomentanforderung (8a) und die zweite Drehmomentanforderung (9a) jeweils eine der vorbestimmten Signalverarbeitungsalternativen in Abhängigkeit von der jeweiligen Kennung (8b, 9b) und in Abhängigkeit davon, ob die Drehmomentanforderung eine Drehmomentvorgabe oder eine Drehmomentlimitierung ist, auszuwählen und auf die empfangenen Drehmomentanforderungen (8a, 9a) anzuwenden.

5. Vorrichtung nach Anspruch 4, **gekennzeichnet durch** ein Auswahlmittel (14, 20), das eingerichtet ist, aus der Drehmomentvorgabe (8a) und der Drehmomentlimitierung (9a) die kleinere Drehmomentvorgabe zu bestimmen und nur diese als verarbeitete Drehmomentvorgabe auszugeben.

6. Vorrichtung nach einem der vorhergehenden Ansprüche, **dadurch gekennzeichnet, dass** die Vorrichtung (10) zur Hinterlegung weiterer Kennungen konfigurierbar ist, derart, dass die in der Vorrichtung (10) hinterlegte Zuordnung, die einer empfangenen Kennung (8b, 9b) eine der vorbestimmten Verarbeitungsalternativen zuordnet, um weitere Kennungswerte zur Identifizierung weiterer Quellen einer Drehmomentanforderung erweiterbar ist.

7. Vorrichtung nach einem der vorhergehenden Ansprüche, **gekennzeichnet durch** eine Filtervorrichtung zur Verarbeitung der mindestens einen Drehmomentanforderung,
(a) die in Abhängigkeit von der ausgewählten Signalverarbeitungsalternative parametrisierbar ist, um die mindestens eine Drehmomentanforderung (8a, 9a) gemäß der ausgewählten Signalverarbeitungsalternative zu filtern; und/oder
(b) die eingerichtet ist, zumindest abschnittsweise eine Gradientenbegrenzung der mindestens einen Drehmomentanforderung durchzuführen.

8. Anordnung zur Verarbeitung von Drehmomentanforderungen, umfassend
(a) eine Momentenkoordinationsvorrichtung (7), die eingerichtet ist, aus einer Vielzahl von der Momentenkoordinationsvorrichtung (7) zugeführten Drehmomentvorgaben (6) und Drehmomentlimitierungen (6) jeweils eine Drehmomentvorgabe (8a) und jeweils eine Drehmomentlimitierung (9a) auszuwählen und auszugeben; und
(b) eine Vorrichtung (10) gemäß einem der Ansprüche 4 bis 7, die nach der Momentenkoordinationsvorrichtung (7) angeordnet ist und eingangsseitig die von der Momentenkoordinationsvorrichtung (7) ausgewählte Drehmomentvorgabe (8a) und Drehmomentlimitierung (9a) empfängt.

9. Verfahren zur Verarbeitung einer Drehmomentvorgabe für eine Antriebsmaschine zur Reduzierung von Triebstrangschlägen, mit den Schritten:
Empfangen mindestens einer Drehmomentanforderung (8a, 9a) und mindestens einer Kennung (8b, 9b) zur Identifizierung einer Quelle (5) der Drehmomentanforderung (8a, 9a);
Auswählen einer von mehreren vorbestimmten Signalverarbeitungsalternativen in Abhängigkeit von der Kennung (8b, 9b) der empfangenen mindestens einen Drehmomentanforderung (8a, 9a); und
Durchführen einer Signalverarbeitung gemäß der ausgewählten Signalverarbeitungsalternative zur Erzeugung mindestens einer verarbeiteten Drehmomentanforderung (11, 12) aus der mindestens einen empfangenen Drehmomentanforderung (8a, 9a), wobei sich die vorbestimmten Signalverarbeitungsalternativen in einer zeitlichen Verzögerung unterscheiden, mit der die mindestens eine verarbeitete Drehmomentanforderung (11, 12) ausgegeben wird.

10. Verfahren nach Anspruch 9, **dadurch gekennzeichnet, dass** die vorbestimmten Signalverarbeitungsalternativen umfassen:
(a) eine erste Signalverarbeitung, die die empfangene mindestens eine Drehmomentanforderung (8a, 9a) mit einer ersten zeitlichen Verzögerung filtert;
(b) eine zweite Signalverarbeitung, die die empfangene mindestens eine Drehmomentanforderung (8a, 9a) mit einer zweiten zeitlichen Verzögerung filtert, wobei die zweite Verzögerung größer als die erste Verzögerung ist; und
(c) eine dritte Signalverarbeitung, bei der die empfangene mindestens eine Drehmomentanforderung (8a, 9a) im Wesentlichen ohne zeitliche Verzögerung und/oder mit einer im Wesentlichen unveränderten Signalform von der Vorrichtung ausgegeben wird.

11. Verfahren nach Anspruch 9 oder 10, **gekennzeichnet durch**
das Empfangen einer ersten Drehmomentanforderung (8a) und einer ersten Kennung (8b) zur Identifizierung der Quelle (5) der ersten Drehmomentanforderung (8a) sowie das Empfangen einer zweiten Drehmomentanforderung (9a) und einer zweiten Kennung (9b) zur Identifizierung der Quelle (5) der zweiten Drehmomentanforderung (9b), wobei die erste Drehmomentanforderung eine Drehmomentvorgabe und die zweite Drehmomentanforderung eine Drehmomentlimitierung ist; und
Auswählen und Anwenden, jeweils für die erste Drehmomentanforderung (8a) und die zweite Drehmomentanforderung (9a), einer der vorbestimmten Signalverarbeitungsalternativen in Abhängigkeit von der jeweiligen Kennung (8b, 9b) und in Abhängigkeit davon, ob die Drehmomentanforderung (8a, 9a) eine Momentvorgabe oder eine Momentlimitierung ist.

12. Verfahren nach Anspruch 11, **gekennzeichnet durch** Bestimmen der kleineren Drehmomentanforderung der Drehmomentvorgabe und der Drehmomentlimitierung und Ausgeben der kleineren Drehmomentanforderung als verarbeitete Drehmomentanforderung.

13. Verfahren nach einem der vorhergehenden Ansprüche 9 bis 12, **dadurch gekennzeichnet, dass** eine hinterlegte Zuordnung, die einer empfangenen Kennung (8b, 9b) eine der vorbestimmten Verarbeitungsalternativen zuordnet, um weitere Kennungen zur Identifizierung weiterer Quellen (5) einer Drehmomentanforderung (8a, 9a) erweiterbar ist.

14. Verfahren nach einem der Ansprüche 11 bis 13, **dadurch gekennzeichnet, dass** das Verfahren ferner umfasst:
Empfangen einer Vielzahl von Drehmomentvorgaben (6) und Drehmomentlimitierungen (6);
Auswählen jeweils einer Momentanforderung (8a) aus der Vielzahl von Drehmomentvorgaben (6) und einer Drehmomentlimitierung (8b) aus der Vielzahl der Drehmomentlimitierungen (6); und
Übermitteln der ausgewählten Drehmomentvorgabe (8a) und der ausgewählten Drehmomentlimitierung (8b) an eine Sollwertformervorrichtung (10), die eingerichtet ist, die Schritte gemäß einem der Verfahren der Ansprüche 11 bis 13 durchzuführen.

15. Kraftfahrzeug, insbesondere Nutzfahrzeug, umfassend eine Vorrichtung gemäß einem der Ansprüche 1 bis 7.

## Claims

1. Device for processing a torque demand for a drive machine and for reducing drive train shocks; which is arranged to:
receive at its input at least one torque demand (8a, 9a) and at least one identifier (8b, 9b) for identifying a source (5) of the torque demand; and
to select one of predetermined signal processing alternatives depending on the at least one identifier (8b, 9b) and to apply the same to the at least one received torque demand (8a, 9a) to produce at least one processed torque demand (11, 12), wherein the predetermined signal processing alternatives differ by a time delay with which the at least one processed torque demand (11, 12) is output.

2. Device according to Claim 1, **characterized in that** the predetermined signal processing alternatives comprise:
(a) a first signal processing approach, which, if selected, filters the at least one received torque demand (8a, 9a) with a first time delay;
(b) a second signal processing approach, which, if selected, filters the at least one received torque demand (8a, 9a) with a second time delay, wherein the second delay is greater than the first delay; and
(c) a third signal processing approach, by means of which, if selected, the at least one received torque demand (8a, 9a) is output by the device (10) essentially without a time delay and/or with an essentially unchanged signal form.

3. Device according to Claim 2, **characterized in that** the device (10) is arranged to process the at least one received torque demand (8a, 9a) according to the third signal processing approach if the identifier (8b, 9b) of the received torque demand (8a, 9a) is not associated with any of the signal processing alternatives in the device (10).

4. Device according to any one of the preceding claims, **characterized in that,**
(a) the device (10) is arranged to receive a first torque demand (8a) and a first identifier (8b) for identifying the source (5) of the first torque demand (8a) and a second torque demand (9a) and a second identifier (9b) for identifying the source (5) of the second torque demand (9a), wherein the first torque demand (8a) is a torque setting and the second torque demand (9a) is a torque limit; and
(b) that the device is arranged to select one of the predetermined signal processing alternatives for the first torque demand (8a) and the second torque demand (9a) respectively depending on the respective identifier (8b, 9b) and depending on whether the torque demand is a torque setting or a torque limit and to apply the same to the received torque demands (8a, 9a).

5. Device according to Claim 4, **characterized by** a selection means (14, 20) that is arranged to determine the smaller torque setting from the torque setting (8a) and the torque limit (9a) and to output only the same as the processed torque setting.

6. Device according to any one of the preceding claims, **characterized in that** the device (10) for storing other identifiers is configurable such that the association stored in the device (10) that associates one of the predetermined processing alternatives with a received identifier (8b, 9b) can be extended by other identifying values for identifying other sources of a torque demand.

7. Device according to any one of the preceding claims, **characterized by** a filtering device for processing the at least one torque demand,
(a) which can be parameterised depending on the selected signal processing alternative in order to filter the at least one torque demand (8a, 9a) according to the selected signal processing alternative; and/or
(b) which is arranged to carry out gradient limiting, at least in segments, of the at least one torque demand.

8. Arrangement for processing von torque demands, comprising
(a) a torque coordination device (7) that is arranged to select and output a torque setting (8a) and a torque limit (9a) respectively from a number of torque settings (6) and torque limits (6) fed to the torque coordination device (7); and
(b) a device (10) according to any one of Claims 4 to 7, which is disposed after the torque coordination device (7) and receives at its input the torque setting (8a) and torque limit (9a) selected by the torque coordination device (7).

9. Method for processing a torque setting for a drive machine for reducing drive train shocks, with the steps:
receiving at least one torque demand (8a, 9a) and at least one identifier (8b, 9b) for identifying a source (5) of the torque demand (8a, 9a);
selecting one of a number of predetermined signal processing alternatives depending on the identifier (8b, 9b) of the at least one received torque demand (8a, 9a); and
carrying out signal processing according to the selected signal processing alternative to produce at least one processed torque demand (11, 12) from the at least one received torque demand (8a, 9a), wherein the predetermined signal processing alternatives differ by a time delay with which the at least one processed torque demand (11, 12) is output.

10. Method according to Claim 9, **characterized in that** the predetermined signal processing alternatives comprise:
(a) a first signal processing approach that filters the at least one received torque demand (8a, 9a) with a first time delay;
(b) a second signal processing approach that filters the at least one received torque demand (8a, 9a) with a second time delay, wherein the second delay is greater than the first delay; and
(c) a third signal processing approach, with which the at least one received torque demand (8a, 9a) is output by the device essentially without a time delay and/or with an essentially unchanged signal form.

11. Method according to Claim 9 or 10, **characterized by**
receiving a first torque demand (8a) and a first identifier (8b) for identifying the source (5) of the first torque demand (8a) and receiving a second torque demand (9a) and a second identifier (9b) for identifying the source (5) of the second torque demand (9b), wherein the first torque demand is a torque setting and the second torque demand is a torque limit; and
selecting and applying one of the predetermined signal processing alternatives for the first torque demand (8a) and the second torque demand (9a) respectively depending on the respective identifier (8b, 9b) and depending on whether the torque demand (8a, 9a) is a torque setting or a torque limit.

12. Method according to Claim 11, **characterized by** determining the smaller torque demand of the torque setting and the torque limit and outputting the smaller torque demand as the processed torque demand.

13. Method according to any one of the preceding Claims 9 to 12, **characterized in that** a stored association that associates one of the predetermined processing alternatives with a received identifier (8b, 9b) can be extended by further identifiers for identifying other sources (5) of a torque demand (8a, 9a).

14. Method according to any one of Claims 11 to 13, **characterized in that** the method also comprises:
receiving a number of torque settings (6) and torque limits (6);
selecting a torque demand (8a) from the number of torque settings (6) and a torque limit (8b) from the number of torque limits (6) respectively; and
transmitting the selected torque setting (8a) and the selected torque limit (8b) to a target value converter device (10) that is arranged to perform the steps according to any one of the methods of Claims 11 to 13.

15. Motor vehicle, especially a truck, comprising a device according to any one of Claims 1 to 7.

## Revendications

1. Dispositif de traitement d'une demande de couple pour une machine motrice et de réduction les chocs dans la chaîne cinématique, qui est conçu pour :
recevoir côté entrée au moins une demande de couple (8a, 9a) et au moins un identificateur (8b, 9b) permettant d'identifier une source (5) de la demande de couple ; et
sélectionner l'une d'alternatives de traitement de signal prédéterminées en fonction dudit au moins un identificateur (8b, 9b) et l'appliquer à ladite au moins une demande de couple reçue (8a, 9a) pour générer au moins une demande de couple traitée (11, 12), dans lequel les alternatives de traitement de signal prédéterminées diffèrent par un temps de retard avec lequel ladite au moins une demande de couple traitée (11, 12) est délivrée.

2. Dispositif selon la revendication 1, **caractérisé en ce que** les alternatives de traitement de signal prédéterminées comprennent :
(a) un premier traitement de signal qui, s'il est sélectionné, filtre ladite au moins une demande de couple reçue (8a, 9a) avec un premier temps de retard ;
(b) un deuxième traitement de signal qui, s'il est sélectionné, filtre au moins une demande de couple reçue (8a, 9a) avec un deuxième temps de retard, le deuxième temps de retard étant supérieur au premier temps de retard ; et
(c) un troisième traitement de signal au moyen duquel, s'il est sélectionné, ladite au moins une demande de couple reçue (8a, 9a) est délivrée par le dispositif (10) sensiblement sans temps de retard et/ou avec une forme de signal sensiblement inchangée.

3. Dispositif selon la revendication 2, **caractérisé en ce que** le dispositif (10) est conçu pour traiter ladite au moins une demande de couple reçue (8a, 9a) conformément au troisième traitement de signal si, dans le dispositif (10), aucune des alternatives de traitement de signal n'est associée à l'identificateur (8b, 9b) de la demande de couple reçue (8a, 9a).

4. Dispositif selon l'une quelconque des revendications précédentes, **caractérisé**
(a) **en ce que** le dispositif (10) est conçu pour recevoir une première demande de couple (8a) et un premier identificateur (8b) permettant d'identifier la source (5) de la première demande de couple (8a) et une deuxième demande de couple (9a) et un deuxième identificateur (9b) permettant d'identifier la source (5) de la deuxième demande de couple (9a),
dans lequel la première demande de couple (8a) est une consigne de couple et la deuxième demande de couple (9a) est une limitation de couple ; et
(b) **en ce que** le dispositif est conçu pour sélectionner respectivement, pour la première demande de couple (8a) et la deuxième demande de couple (9a), l'une des alternatives de traitement de signal prédéterminées en fonction de l'identifiant (8b, 9b) respectif et en fonction du fait que la demande de couple est une consigne ou une limitation de couple et pour l'appliquer aux demandes de couple reçues (8a, 9a).

5. Dispositif selon la revendication 4, **caractérisé par** un moyen de sélection (14, 20) qui est conçu pour déterminer la plus faible consigne de couple entre la consigne de couple (8a) et la limitation de couple (9a) et pour ne délivrer que celle-ci en tant que consigne de couple traitée.

6. Dispositif selon l'une quelconque des revendications précédentes, **caractérisé en ce que** le dispositif (10) peut être configuré pour stocker d'autres identificateurs de telle sorte que l'association stockée dans le dispositif (10), qui associe l'une des alternatives de traitement prédéterminées à un identificateur reçu (8b, 9b), puisse être complétée par des valeurs d'identification supplémentaires permettant d'identifier d'autres sources d'une demande de couple supplémentaire.

7. Dispositif selon l'une quelconque des revendications précédentes, **caractérisé par** un dispositif de filtrage destiné à traiter ladite au moins une demande de couple,
(a) qui peut être paramétré en fonction de l'alternative de traitement de signal sélectionnée pour filtrer ladite au moins une demande de couple (8a, 9a) conformément à ladite alternative de traitement de signal sélectionnée ; et/ou
b) qui est conçu pour effectuer au moins par sections une limitation de gradient de ladite au moins une demande de couple.

8. Dispositif de traitement de demandes de couple, comprenant
(a) un dispositif de coordination de couple (7) conçu pour sélectionner et délivrer respectivement une consigne de couple respective (8a) et une limitation de couple respective (9a) parmi une pluralité de consignes de couple (6) et de limites de couple (6) fournies au dispositif de coordination de couple (7) ; et
(b) un dispositif (10) selon l'une quelconque des revendications 4 à 7, qui est disposé en aval du dispositif de coordination de couple (7) et reçoit côté entrée la consigne de couple (8a) et la limitation de couple (9a) sélectionnées par le dispositif de coordination de couple (7).

9. Procédé de traitement d'une consigne de couple pour une machine motrice afin de réduire les chocs dans la chaîne cinématique, comprenant les étapes consistant à :
recevoir au moins une demande de couple (8a, 9a) et au moins un identificateur (8b, 9b) permettant d'identifier une source (5) de la demande de couple (8a, 9a) ;
sélectionner l'une d'une pluralité d'alternatives de traitement de signal prédéterminées en fonction de l'identificateur (8b, 9b) de ladite au moins une demande de couple reçue (8a, 9a) ; et
effectuer un traitement du signal conformément à l'alternative de traitement de signal sélectionnée pour générer au moins une demande de couple traitée (11, 12) à partir de ladite au moins une demande de couple reçue (8a, 9a), dans lequel les alternatives de traitement de signal prédéterminées diffèrent par un temps de retard avec lequel ladite au moins une demande de couple traitée (11, 12) est délivrée.

10. Procédé selon la revendication 9, **caractérisé en ce que** les alternatives de traitement de signal prédéterminées comprennent :
(a) un premier traitement de signal qui filtre ladite au moins une demande de couple reçue (8a, 9a) avec un premier temps de retard ;
(b) un deuxième traitement de signal qui filtre ladite au moins une demande de couple reçue (8a, 9a) avec un deuxième temps de retard, le deuxième temps de retard étant supérieur au premier temps de retard, et
(c) un troisième traitement de signal au moyen duquel ladite au moins une demande de couple reçue (8a, 9a) est délivrée par le dispositif sensiblement sans temps de retard et/ou avec une forme de signal sensiblement inchangée.

11. Procédé selon la revendication 9 ou 10, **caractérisé en ce qu'**il consiste à
recevoir une première demande de couple (8a) et un premier identificateur (8b) permettant d'identifier la source (5) de la première demande de couple (8a), et recevoir une deuxième demande de couple (9a) et un deuxième identificateur (9b) permettant d'identifier la source (5) de la deuxième demande de couple (9b), dans lequel la première demande de couple est une consigne de couple et la deuxième demande de couple est une limitation de couple ; et
sélectionner et appliquer respectivement, pour la première demande de couple (8a) et la deuxième demande de couple (9a), l'une des alternatives de traitement de signal prédéterminées en fonction de l'identificateur respectif (8b, 9b) et en fonction du fait que la demande de couple (8a, 9a) est une consigne de couple ou une limitation de couple.

12. Procédé selon la revendication 11, **caractérisé en ce qu'**il consiste à déterminer la plus faible demande de couple entre la consigne de couple et la limitation de couple et à délivrer la plus faible demande de couple en tant demande de couple traitée.

13. Procédé selon l'une des revendications 9 à 12 précédentes, **caractérisé en ce qu'**une association stockée, qui associe l'une des alternatives de traitement prédéterminées à un identificateur reçu (8b, 9b), peut être complétée par d'autres identificateurs permettant d'identifier d'autres sources (5) d'une demande de couple (8a, 9a).

14. Procédé selon l'une quelconque des revendications 11 à 13, **caractérisé en ce que** le procédé consiste en outre à :
recevoir une pluralité de consignes de couple (6) et de limitations de couple (6) ;
sélectionner respectivement une demande de couple (8a) parmi la pluralité de consignes de couple (6) et une limitation de couple (8b) parmi la pluralité de limitations de couple (6) ; et
transmettre la consigne de couple sélectionnée (8a) et la limitation de couple sélectionnée (8b) à un dispositif de mise en forme de valeur de consigne (10) conçu pour mettre en oeuvre les étapes de l'un des procédés selon les revendications 11 à 13.

15. Véhicule automobile, en particulier véhicule utilitaire, comportant un dispositif selon l'une des revendications 1 à 7.
